# EUROPEAN PATENT APPLICATION

(11) **EP 4 550 250 A1**
(43) Date of publication of application: **07.05.2025**
(21) Application number: 23889860.5
(22) Date of filing: 22.09.2023
(51) Int. Cl.: G06T 1/20

(54) **GRAPHIC PROCESSING METHOD AND APPARATUS, AND COMPUTER-READABLE STORAGE MEDIUM**

(71) Applicant: VeriSilicon Microelectronics (Chengdu) Co., Ltd., Chengdu, Sichuan 610041 (CN); VeriSilicon Microelectronics (Shanghai) Co., Ltd., Shanghai 201203 (CN)
(72) Inventor: ZHENG, Ping, Chengdu Sichuan 610041 (CN); LI, Jia, Chengdu Sichuan 610041 (CN); YE, Ting, Chengdu Sichuan 610041 (CN); ZHANG, Huiming, Chengdu Sichuan 610041 (CN)
(74) Representative: Locas, Davide
(86) International application number: PCT/CN2023/120715
(87) International publication number: WO 2025/060068

(57) **Abstract**

The present disclosure relates to the field of graphic processing and specifically relates to a graphic processing method, an apparatus, an electronic device, and a computer-readable storage medium. The graphic processing method comprises: obtaining a graphic to be processed, wherein the graphic to be processed comprises a plurality of sub-graphics; performing graphic processing on the plurality of sub-graphics using the plurality of graphic processing modules, wherein each graphic processing module processes up to one sub-graphic in a single processing cycle; obtaining a size of the storage space required by each graphic processing module for processing the sub-graphic; and allocating a corresponding amount of the storage units to each graphic processing module according to the size of the storage space. Compared with the prior art, the embodiment of the present disclosure provides a graphic processing method, an apparatus, an electronic device and a computer-readable storage medium, which has the advantage of being able to reduce the overall demand for the size of the storage space.

## Description

### Technical Field

The present disclosure relates to the field of graphic processing, and more specifically, to a graphic processing method, an apparatus, an electronic device, and a computer-readable storage medium.

### Background Art

As applications such as machine vision and the internet of things continue to evolve, chips of graphic processing units are increasingly demanding in terms of area and performance, which puts the memory inside and outside the chip to the test. In the complex process of graphic processing, the graphic processing unit is often divided into multiple graphic processing modules, which respectively process different parts of the graphic at the same time.

In different scenarios, depending on the sub-graphics handled by each graphic processing module, the size of the storage space to be used by each graphic processing module varies. In the prior art, when allocating storage areas to each graphic processing module, in order to ensure the normal operation of each graphic processing module, the maximum storage space required by each area in different scenarios will be allocated to each area, such that a large demand for the overall size of the storage space is required.

### Summary

The object of the present disclosure is to provide a graphic processing method, an apparatus, an electronic device, and a computer-readable storage medium, which are capable of reducing the overall need for the size of storage space.

In the first aspect, the present disclosure provides a graphic processing method, applied to a graphic processing apparatus, wherein the graphic processing apparatus comprises a graphic processing device and a memory, the graphic processing device comprises a plurality of graphic processing modules, the memory comprises a plurality of storage units, and the graphic processing method comprises: obtaining a graphic to be processed, wherein the graphic to be processed comprises a plurality of sub-graphics; using the plurality of graphic processing modules to perform graphic processing on the plurality of sub-graphics, wherein each of the graphic processing modules processes up to one of the sub-graphics in a single processing cycle; obtaining the size of the storage space required by each of the graphic processing modules for processing the sub-graphics; and allocating a corresponding amount of the storage units to each of the graphic processing modules based on the size of the storage space.

Compared to the prior art, in the graphic processing method provided by embodiments of the present disclosure, the graphic processing device divides the graphic to be processed into a plurality of sub-graphics when processing each graphic to be processed, and each graphic processing module in the graphic processing device correspondingly processes one sub-graphic. In the process, a corresponding amount of storage units for each graphic processing module is allocated according to the size of the storage space required by each graphic processing module to process the corresponding sub-graphic. It is possible to flexibly allocate storage units in the memory without affecting the processing of corresponding sub-graphics by individual graphic processing modules, thereby reducing the overall demand for the size of the storage space by the graphic processing device.

In an optional embodiment, the allocating a corresponding amount of the storage units to each of the graphic processing modules based on the size of the storage space comprises: allocating a corresponding cache address to each of the graphic processing modules based on the amount of the storage units; and constructing a correspondence between the cache address and the number and in-unit address of the storage unit, wherein the in-unit address is an address stored within the storage unit. A cache address is assigned according to the demand for storage space by each graphic processing module, and then the assigned cache address is converted with the number of the storage unit and the address within the storage unit, so that the storage unit assigned to each graphic processing module can be distributed at an arbitrary position in the memory, and the storage space in the memory can be better utilized.

In an optional embodiment, the using the plurality of graphic processing modules to perform graphic processing on the plurality of sub-graphics comprises: obtaining write information and a corresponding write cache address; obtaining a target number and a target in-unit address of the storage unit corresponding to the write cache address based on the correspondence; and writing the write information to a storage position corresponding to the target number and the target in-unit address. When writing write information to the memory, the write information is written to the storage position corresponding to the target number and the target in-unit address, such that the write information is more accurately written to the storage units distributed throughout the memory.

In an optional embodiment, the using the plurality of graphic processing modules to perform graphic processing on the plurality of sub-graphics comprises: obtaining a read cache address; obtaining a target number and a target in-unit address of the storage unit corresponding to the read cache address are obtained based on the correspondence; and reading the target information from a storage position corresponding to the target number and the target in-unit address. When reading target information from the memory, the target information is read back from the storage position corresponding to the target number and the target in-unit address, so as to more accurately read back the target information from the storage units distributed throughout the memory.

In an optional embodiment, after the reading the target information from a storage position corresponding to the target number and the target in-unit address, the graphic processing method further comprises: releasing the cache address corresponding to the target number and the target in-unit address. The corresponding cache address is released after the read operation, so that the cache address can be reused to improve the utilization efficiency of the storage space in the memory.

In an optional embodiment, the using the plurality of graphic processing modules to perform graphic processing on the plurality of sub-graphics comprises: releasing all of the storage units allocated to the graphic processing modules, after finishing the graphic processing for the sub-graphic by each graphic processing module. All the storage units are released after processing each frame of graphics, which facilitates the process of subsequent graphic processing to reallocate and reutilize the storage units, thereby enhancing the utilization efficiency of the storage space in the memory.

In an optional embodiment, the number of graphics to be processed is multiple, and the graphic processing method comprises: determining the size of the storage unit based on the graphic format and the resolution of the plurality of graphics to be processed. According to the determined size of the storage unit for all the plurality of graphics to be processed, the storage space in the memory can be better divided and utilized according to actual needs.

In the second aspect, the present disclosure provides a graphic processing apparatus, comprising: a graphic processing device and a memory, wherein the memory comprises a plurality of storage units, and the graphic processing device comprises a graphic acquisition device, a plurality of graphic processing modules, and a storage unit allocation device. The graphic acquisition device is configured to acquire a graphic to be processed, the graphic to be processed comprises a plurality of sub-graphics, and the plurality of graphic processing modules are configured to perform graphic processing on the plurality of sub-graphics. Each graphic processing module processes up to one sub-graphic in a single processing cycle, the storage unit allocation device is configured to obtain the size of storage space required by each graphic processing module for processing the sub-graphic, and to allocate a corresponding amount of the storage units to each graphic processing module in accordance with the size of the storage space.

In an optional embodiment, the graphic processing module further comprises: a cache address management sub-device. The storage unit allocation device is configured to allocate a corresponding cache address for each graphic processing module according to the amount of the storage units, and the cache address management sub-device is configured to construct a correspondence between the cache address and number and an in-unit address of the storage unit, wherein the in-unit address is an address stored within the storage unit.

In an optional embodiment, the graphic processing module further comprises a cache write sub-device, wherein the cache write sub-device is configured to obtain write information and a corresponding write cache address; obtain a target number and a target in-unit address of the storage unit corresponding to the write cache address based on the correspondence; and write the write information to a storage position corresponding to the target number and the target in-unit address.

In an optional embodiment, the graphic processing module further comprises a cache read sub-device, wherein the cache read sub-device is configured to obtain a read cache address; obtain the target number and the target in-unit address of the storage unit corresponding to the read cache address according to the correspondence; and read the target information from the storage position corresponding to the target number and the target in-unit address.

In an optional embodiment, after the cache read sub-device reads back target information from a storage position corresponding to the target number and the target in-unit address, the cache address management sub-device is further configured to release the cache address corresponding to the target number and the target in-unit address.

In an optional embodiment, after each graphic processing module has completed graphic processing for the sub-graphic, the storage unit allocation device is further configured to release all storage units allocated to the graphic processing modules.

In an optional embodiment, the number of graphics to be processed is multiple, and the storage unit allocation device is further configured to: determine the size of the storage unit based on the graphic format and resolution of the plurality of graphics to be processed.

In the third aspect, the present disclosure provides a computer-readable storage medium, storing a computer program, the computer program is executed by a processor to implement the graphic processing method described in any of the preceding embodiments.

Compared to the prior art, in the graphic processing method, an apparatus, an electronic device, and a computer-readable storage medium provided in embodiments of the present disclosure, according to the size of the storage space required by each graphic processing module to process the corresponding sub-graphic, a corresponding amount of storage units can be allocated to each graphic processing module. This can flexibly allocate storage units in the memory without affecting the processing of corresponding sub-graphic by each graphic processing module, thereby reducing the overall demand for the size of the storage space by the graphic processing device.

### Brief Description of Drawings

In order to more clearly illustrate the technical solutions of the embodiments of the present disclosure, the drawings to be used in the embodiments will be briefly introduced below, and it should be understood that the following drawings only illustrate certain embodiments of the present disclosure, and therefore should not be regarded as a limitation of the scope. Other relevant drawings can be obtained from these drawings by a person of ordinary skill in the art without inventive effort.
FIG. 1 is a schematic flow chart of a graphic processing method provided in Example 1 of the present disclosure;
FIG. 2 is a schematic view of the correspondence between a cache address and a number and an in-unit address of storage unit in a graphic processing method provided in Example 1 of the present disclosure;
FIG. 3 is a structural schematic view of a graphic processing apparatus provided in Example 2 of the present disclosure;
FIG. 4 is a structural schematic view of a graphic processing apparatus provided in another example of the present disclosure; and
FIG. 5 is a schematic flow chart of an exemplary graphic processing method of the present disclosure.

### Detailed Description of Embodiments

In order to make the purpose, technical solutions and advantages of the embodiments of the present disclosure clearer, the technical solutions in the embodiments of the present disclosure will be clearly and completely described below in conjunction with the drawings in the embodiments of the present disclosure, and it is clear that the described embodiments are a part of the embodiments of the present disclosure, and not all of the embodiments. The components of embodiments of the present disclosure generally described and illustrated in the drawings herein can be arranged and designed in a variety of different configurations.

Accordingly, the following detailed description of embodiments of the present disclosure provided in the drawings is not intended to limit the scope of the present disclosure, but rather represents only selected embodiments of the present disclosure. Based on the embodiments in the present disclosure, all other embodiments obtained by a person of ordinary skill in the art without inventive effort fall within the scope of protection of the present disclosure.

It should be noted that similar symbols and letters denote similar items in the following drawings, so that once an item is defined in a drawing, no further definition or explanation for it is required in the subsequent drawings.

In the description of the present disclosure, it should be noted that the terms "top", "bottom", "inside", "outside", etc., if present, indicate an orientation or positional relationship based on that shown in the drawings, or an orientation or positional relationship in which the product of the present disclosure is customarily placed in use, and they are intended solely for the purpose of facilitating the description of the present disclosure and simplifying the description, and are not intended to indicate or imply that the device or element referred to must be in a specific orientation or constructed and operated with a particular orientation, and thus are not to be construed as a limitation of the present disclosure.

In addition, if the terms "first", "second", etc. appear, they are used only for the purpose of distinguishing descriptions and are not to be construed as indicating or implying relative importance.

It is noted that features in embodiments of the present disclosure can be combined with each other without conflict.

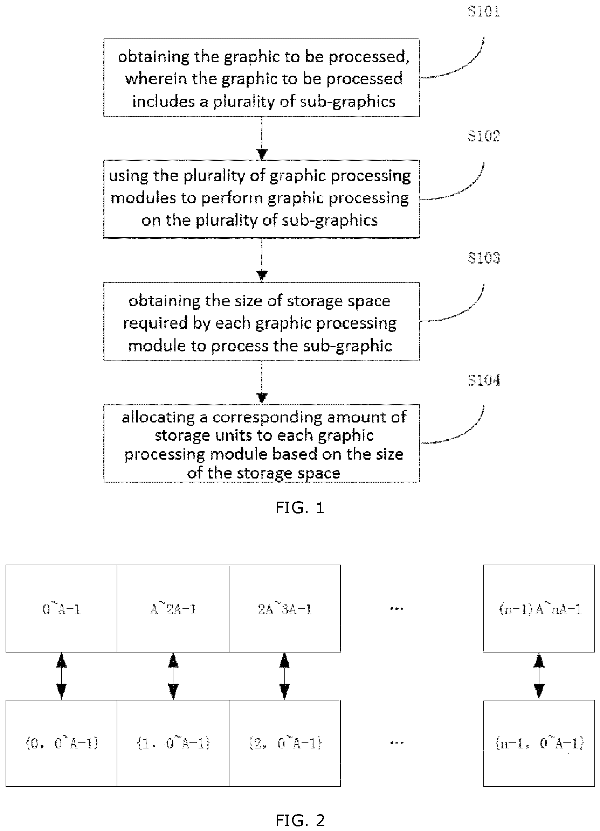

Example 1 of the present disclosure provides a graphic processing method, applied to a graphic processing apparatus, wherein the graphic processing apparatus comprises a graphic processing device and a memory, the graphic processing device comprises a plurality of graphic processing modules, and the memory comprises a plurality of storage units, wherein the graphic processing method, as illustrated in FIG. 1, includes the following steps.

Step S101: obtaining the graphic to be processed, wherein the graphic to be processed includes a plurality of sub-graphics.

In this step, the graphic to be processed is an image that needs to go through graphic processing performed by the graphic processing apparatus, which can be a different images in different embodiments, for example, in some embodiments of the present disclosure, the graphic to be processed can be one image frame in a video, or in some other embodiments of the present disclosure, the graphic to be processed can also be an image in a set of images in the training process of the model, and so on. The graphic to be processed can be a different images specifically in different application scenarios.

In this step, each sub-graphic is one portion of the graphic to be processed, that is, one graphic to be processed can be split into a plurality of sub-graphics. In different embodiments of the present disclosure, the sub-graphics can be different parts of the graphic to be processed, for example, in some embodiments of the present disclosure, it can be that the graphics to be processed are divided into regions, and the part of the graphic to be processed in each region is one sub-graphic. In some other embodiments of the present disclosure, it can also be that the graphics to be processed are divided into layers, and each layer of the graphic to be processed forms one sub-graphic, etc., and the sub-graphics can be different parts of the graphic to be processed, specifically in different application scenarios.

In addition, in some embodiments of the present disclosure, the method of dividing sub-graphics for each graphic to be processed can also be different, for example, in the application scenario of video images, the consecutive frame images are used as the graphic to be processed, wherein each frame image can be divided into sub-graphics using different ways, which can be used flexibly according to the actual needs.

In addition, in different embodiments of the present disclosure, the division of the graphic to be processed into a plurality of sub-graphics can be performed in the graphic processing device provided in embodiments of the present disclosure, or it can have been divided in other devices. The graphic processing device provided in embodiments of the present disclosure can directly acquire the various sub-graphics together when acquiring the graphic to be processed, which can be used flexibly according to the actual needs.

Step S102: using the plurality of graphic processing modules to perform graphic processing on the plurality of sub-graphics.

In this step, each graphic processing module processes up to one sub-graphic in one processing cycle. During the process of graphic processing for a graphic to be processed, sub-graphics can be assigned to the plurality of graphic processing modules according to the actual number of sub-graphics required to be processed, e.g., when the number of sub-graphics is less than the number of graphic processing modules, one sub-graphic can be assigned to some of the graphic processing modules for the graphic processing, and another part of the graphic processing modules is not assigned with sub-graphics. When the number of sub-graphics is equal to the number of graphic processing modules, one sub-graphic can be assigned to each of the graphic processing modules for the graphic processing. When the number of sub-graphics is greater than the number of graphic processing modules, one or more sub-graphics can be assigned to each graphic processing module for graphic processing. Regardless of how many sub-graphics are assigned to each graphic processing module for graphic processing, in one processing cycle, that is, in one process of submodule processing, each graphic processing module only processes one sub-graphic. When more than one sub-graphics are assigned to one graphic processing module for graphic processing, the graphic processing module processes only one sub-graphic at a time, and processes the other sub-graphics after this sub-graphic has been processed.

Step S103: obtaining the size of storage space required by each graphic processing module to process the sub-graphic.

In different embodiments of the present disclosure, obtaining the size of the storage space required by the respective graphic processing modules to process the sub-graphics can be performed in a graphic processing device provided in embodiments of the present disclosure, which is determined, for example, based on graphic parameters such as the size, the resolution, and the graphic format of the sub-graphics. It can also be determined and completed in other devices, and the graphic processing device provided by the embodiments of the present disclosure can directly obtain the size of the storage space required for processing each sub-graphic together when obtaining the graphic to be processed, which can be used flexibly according to the actual needs.

Step S104: allocating a corresponding amount of storage units to each graphic processing module based on the size of the storage space.

In this step, a storage unit is the smallest storage unit in the memory for allocating storage space, i.e., the allocation of storage space can be performed in accordance with an integer number of storage units, such as allocating 2, 3, 4, 5, 6, and other integer numbers of storage units to one graphic processing module. When the size of storage space required for one graphic processing module is a non-integer multiple of the size of the storage space of the storage unit, the allocation of the storage unit can be performed based on the result rounded up. For example, when the size of storage space required for one graphic processing module is 1.5 times the size of the storage space of the storage unit, two storage units can be allocated to that graphic processing module.

The size of the storage unit can be determined according to actual needs, and in the case where the graphic processing device processes a plurality of associated graphics to be processed at a single time, such as performing graphic processing on individual frames of a image in one video image, the size of the storage unit can be determined based on the graphic data such as graphic format, resolution, and size of the graphics of the all graphics to be processed. For example, depending on the size of the storage space required for each graphic to be processed, the size of the storage unit can be its greatest common divisor, or be the size of the storage space with a fraction of its highest common factor, and so on. In addition, in some other embodiments of the present disclosure, the determination of the size of the storage unit can also be based on the method of dividing the sub-graphic, which can be used flexibly according to the actual need.

In addition, in some embodiments of the present disclosure, the process of allocating a corresponding amount of storage units to each graphic processing module can include allocating a corresponding cache address to each graphic processing module according to the amount of storage units allocated to each graphic processing module. For example, in some embodiments of the present disclosure, when 3 storage units are assigned to the graphic processing module A1, the cache addresses of 0 to 3A-1 can be assigned to the graphic processing module A1, and when 4 storage units are assigned to the graphic processing module A2, the cache addresses of 3A to 7A-1 can be assigned to the graphic processing module A2, and so on.

As shown in FIG. 2, after assigning a cache address to each graphic processing module, a correspondence can be constructed between the cache address 0 to nA-1 and the number 0 to n-1 of the storage unit as well as the in-unit address 0 to A-1, wherein the in-unit address is the storage address within the storage unit. The number of storage unit can identify which storage unit is the storage unit corresponding to the cache address, wherein the storage address within the storage unit is the storage address within each storage unit, and one storage unit can include storage addresses 0 to A-1 within the storage unit, wherein A is the size of the storage space of the storage unit. For each cache address, it corresponds to one {number of storage unit, storage address within the storage unit}, for example, for the cache address of 2A-15, the correspondence corresponds to {1, A-15}, wherein 1 is the number of the storage unit, and A-15 is the storage position of the cache address A-15 within the storage unit having the number of 1. A cache address is assigned according to the demand for storage space by each graphic processing module, and then the assigned cache address is converted with the number of the storage unit and the address within the storage unit. When searching each cache address, the corresponding storage unit can be found according to the number of the corresponding storage unit, and then the corresponding storage address can be found according to the in-unit address, such that the storage unit assigned to each graphic processing module can be distributed in any position in the memory without the need for assigning a sequential storage area to each graphic processing module, and the storage space in the memory can be utilized better.

For example, the process of graphic processing for the plurality of sub-graphics using the plurality of graphic processing modules can include a write operation, i.e., writing the write information that needs to be written to the memory in the memory. In the process of the write operation, the write information and the corresponding write cache address are obtained first, wherein the write cache address is the address of the storage area in which the write information is written, and then, the target number and the target in-unit address of the storage unit corresponding to the write cache address are obtained according to the correspondence, and the write information is written into the storage position corresponding to the target number and the target in-unit address. When writing the write information to the memory, the write information is written into the storage position corresponding to the target number and the target in-unit address, such that the write information is more accurately written to the storage units distributed throughout the memory.

In some embodiments of the present disclosure, the write information can, for example, be pixel point information of the graphic to be processed, and after writing the pixel point information to a storage unit in the memory, a correspondence between the pixel point information and the write cache address can be established.

In addition, the process of graphic processing for the plurality of sub-graphics by the plurality of graphic processing modules can also include a read operation, i.e., reading back the target information stored in the memory from the memory. In the process of the read operation, first, the address of the read operation is obtained, i.e., the address at which the target information is stored, and then, the target number and the target in-unit address of the storage unit corresponding to the read cache address are obtained according to the correspondence. The target information is read back from the storage position corresponding to the target number and the target in-unit address. When reading the target information from the memory, the target information is read back from the storage position corresponding to the target number and the target in-unit address, such that the target information is read back more accurately from storage units distributed throughout the memory.

In some embodiments of the present disclosure, the target information can, for example, be pixel point information of the graphic to be processed. At this time, for example, when obtaining the read operation address, based on the correspondence between a read cache address and the pixel point information, the cache address corresponding to the pixel point information in the target information can be obtained as the read operation address.

In some embodiments of the present disclosure, after reading back the target information from the storage position corresponding to the target number and the target in-unit address, it can further include: releasing the cache address corresponding to the target number and the target in-unit address. After the cache address is released, when a write operation is performed, the released cache address can be used again to write data to the corresponding cache position, such that the cache address can be reused, thereby enhancing the utilization efficiency of the storage space in the memory.

In addition, in some embodiments of the present disclosure, each graphic processing module releases all of the storage units allocated to the graphic processing module after finishing the graphic processing for the sub-graphics. For example, when the graphic processing module A1 processes the sub-graphic B1, three storage units numbered 0, 1, and 2 are allocated to the graphic processing module A1. After the graphic processing module A1 completes processing the sub-graphic B1, the three storage units numbered 0, 1, and 2 are released. The three storage units numbered 0, 1, and 2 can be allocated to other graphic processing modules or to graphic processing module A1 again to process other sub-graphics. After each frame of graphic is processed, all storage units are released, such that the storage units can be allocated and utilized again during subsequent graphic processing, thereby improving the utilization efficiency of storage space in the memory.

In addition, in some embodiments of the present disclosure, the read operation and the write operation can be arbitrated before the read operation or the write operation is performed, and the read operation and the write operation for which the arbitration is passed can be performed accordingly.

Compared to the prior art, in the graphic processing method provided in Example 1 of the present disclosure, when the graphic processing device processes each graphic to be processed, it divides the graphic to be processed into multiple sub-graphics, and each graphic processing module in the graphic processing device correspondingly processes one sub-graphic. In this process, according to the size of the storage space required for each graphic processing module to process the corresponding sub-graphic, a corresponding amount of storage units are allocated for each graphic processing module, such that the storage units in the memory can be flexibly allocated without affecting the processing for the corresponding sub-graphics by each graphic processing module, thereby reducing the overall demand of the graphic processing device for the size of the storage space.

In a specific embodiment of the present disclosure, for example, the number of graphics to be processed is 3. For example, the storage unit can be set as one memory particle, and the size of the memory particle is 32KB (a total of 32 storage positions, each with a size of 1KB). In this case, the processing flow includes:
Scene 1, processing graphic 1: sub-graphic 0 requires 2 storage units, sub-graphic 1 requires 2 storage units, sub-graphic 2 requires 1 storage unit, and sub-graphic 3 requires 2 storage units;
Scene 2, processing graphic 2: sub-graphic 0 requires 4 storage units, sub-graphic 1 requires 1 storage unit, sub-graphic 2 requires 2 storage units, and sub-graphic 3 does not require the storage unit; and
Scene 3, processing graphic 3: sub-graphic 0 requires 3 storage units, sub-graphic 1 requires 3 storage units, sub-graphic 2 requires 1 storage unit, and sub-graphic 3 requires 1 storage unit.

A single sub-graphic requires a maximum of 4 storage units, a total of 8 storage units are required for processing graphic 3. According to the graphic processing method provided in the embodiments of the present disclosure, the overall size of the storage space requires only 8 storage units, whereas according to the graphic processing method of the prior art, each sub-graphic needs to be allocated with 4 storage units, for a total of 16 storage units.

There are 8 storage units in total, each with a size of 32KB, for example, there can be 8 memory particles, each with a size of 32KB, numbered respectively grp0, grp1, grp2, ..., grp7; their corresponding cache address ranges are 0-31{0, 0-31}, 32-63{1, 0-31}, 64-95{2, 0-31}, ..., 224-255{7, 0-31}, respectively. In the graphic processing method provided in embodiments of the present disclosure, the number of storage particles required to be allocated for each sub-graphic is determined when each graphic to be processed is being processed, and then the corresponding number of storage particles for the corresponding sub-graphic is assigned by the storage unit allocation device. For example, in the process of processing the graphic to be processed 1, the sub-graphic 0 uses a total of 64KB of storage space of grp2 and grp3, and the sub-graphic 1 uses a total of 96KB of storage space of grp7, grp0, and grp1. According to the size of the space required to be allocated for the current sub-graphs as informed by the software, the cache address management sub-device will allocate the address of the corresponding storage space, for example, when sub-graphic 1 is allocated with 96KB of storage space, the cache address management sub-device will allocate the corresponding addresses 0-95 to sub-graphic 1, wherein 0-31 corresponds to the memory particle grp7, 32-63 corresponds to the memory particle grp0, and 64-95 corresponds to the memory particle grp1. The cache address management sub-device and the cache read sub-device, when reading a pixel point using a read cache address, will convert the corresponding address into a target number and a target in-unit address of {grpN memory particle number, 0 to 31}, which will be sent to the memory access management device. When the memory access management device receives the target number and the target in-unit address, it will be converted into an access signal corresponding to the storage particle according to the grpN storage particle number in the high bit of the address. The data can be read according to the access signal.

Processing graphic 1 corresponds to Scene 1, and processing graphic 2 corresponds to Scene 2. When processing graphic 1, the storage unit allocation device assigns grp0 and grp1 to sub-graphic 0, grp2 and grp3 to sub-graphic 1, grp4 to sub-graphic 2, and grp5 and grp6 to sub-graphic 3. When processing graphic 2, the storage unit allocation device assigns grp7, grp0, grp1, and grp2 to sub-graphic 0, grp3 to sub-graphic 1, and grp4 and grp5 to sub-graphic 2, and no assignment is for sub-graphic 3.

64KB of storage space is allocated when processing sub-graphic 0 in graphic 1. The cache address management sub-device releases address 0-63, the cache write sub-device matches address 0-63 according to the number grp0 and grp1, sends out a write access {0/1, 0-31}, and writes the corresponding info information to the cache address management sub-device. The info information includes the correspondence between the pixel point information and the write cache address, wherein the info information can be used by the cache read sub-device to match the cache address corresponding to the requested pixel point coordinates as the read cache address. The cache read sub-device, after matching the address, also matches the cache address according to the particle number, sends out read access {0/1, 0-31}, and releases the address to the cache address management sub-device after reading back the cache pixel points, and then the cache address management sub-device releases the address to the cache write sub-device and recycles and utilizes the address until after the processing for one graphic to be processed is finished, the cache read sub-device releases the storage particles to the storage unit allocation device, and informs that the cache space is no longer needed, and grp0 and grp1 can be recycled. According to the high bit of address of the read and write accesses, the storage particle that is accessed by the local access can be determined, and converted to the corresponding access order.

128KB of storage space is required to be allocated to process sub-graphic 0 of graphic 2, and grp7 with 32KB of cache space remains for processing graphic 1. The grp0 and grp1 are released after sub-graphic 0 of graphic 1 has been processed, and it is necessary to wait for the space released after the processing of the other sub-graphics of graphic 1 to allocate 128KB of storage space to sub-graphic 0 of graphic 2. After waiting for the allocation to be completed, sub-graphic 0 starts to be operated, and the number of the corresponding storage particles is grp7, grp0, grp1, and grp2. The cache address management sub-device releases the address 0-127, and the cache write sub-device matches the address 0-127 according to the number of grp7, grp0, grp1, and grp2, and sends out the write access {7/0/1/2, 0-31}, and writes the corresponding info information to the cache address management sub-device for the cache read sub-device to match the read cache address corresponding to the requested pixel point information. The cache read sub-device, after matching the address, also matches the cache address according to the particle number, and sends out a read access {7/0/1/2, 0-31}, and after reading back the cache pixel point information, the address is released to the cache address management sub-device, which in turn releases the address to the cache write sub-device, for recycling and utilizing, until after all pixel points are read for graphic 2, the cache read sub-device releases the particles to the storage unit allocation device, and informs that no more cache space is needed and grp7, grp0, grp1, and grp2 can be reclaimed.

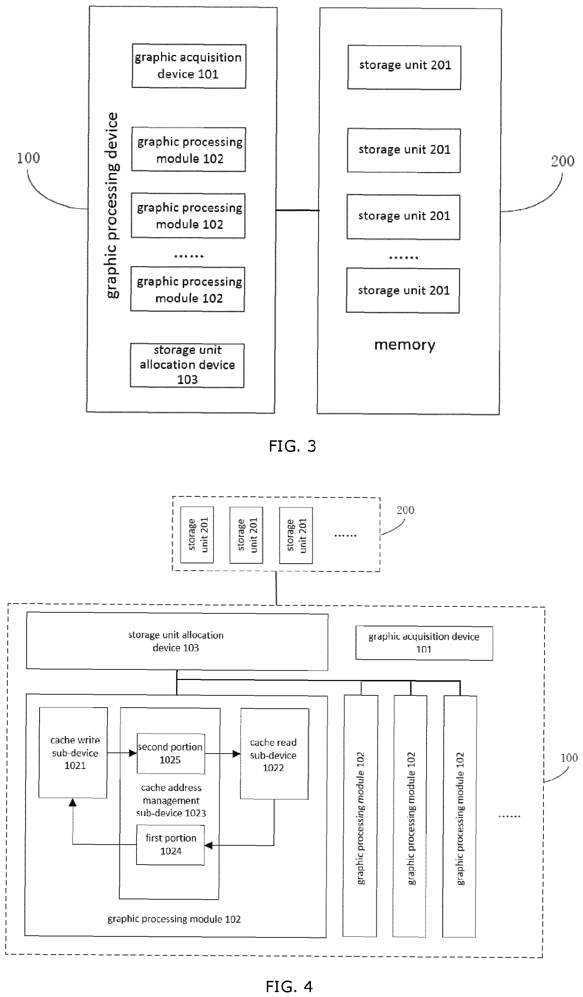

Example 2 of the present disclosure provides a graphic processing apparatus, as shown in FIG. 3, comprising: the graphic processing device 100 and the memory 200, wherein the memory 200 comprises a plurality of storage units 201.

The graphic processing device 100 includes a graphic acquisition device 101, a plurality of graphic processing modules 102, and a storage unit allocation device 103, wherein the graphic acquisition device 101 is used to acquire a graphic to be processed, the graphic to be processed includes a plurality of sub-graphics, the plurality of graphic processing modules 102 are used to perform graphic processing on the plurality of sub-graphics, and each of the graphic processing modules 102 processes up to one sub-graphic. The storage unit allocation device 103 is used to obtain the size of the storage space required by each graphic processing module 102 for processing sub-graphic and allocate a corresponding amount of storage units to each graphic processing module according to the size of the storage space.

In some embodiments of the present disclosure, the graphic processing device 100 may be a graphics processor, and the memory 200 is an external storage device attached to the graphics processor. In some other embodiments of the present disclosure, the graphic processing device 100 may be a part of the graphics processor and the memory 200 is also a part of the graphics processor, i.e., the memory 200 is an internal cache unit in the graphics processor.

Compared to the prior art, in the graphic processing apparatus provided in Example 2 of the present disclosure, the graphic processing device 100, when processing each graphic to be processed, divides the graphic to be processed into a plurality of sub-graphics, and each graphic processing module 102 correspondingly processes one sub-graphic. In this process, a corresponding amount of storage units 201 are allocated to each graphic processing module 102 according to the size of the storage space required for each graphic processing module 102 to process the corresponding sub-graphic, so that the storage units 201 in the memory 200 can be flexibly allocated without affecting the processing for the corresponding sub-graphic by each graphic processing module 102, thereby reducing the overall demand for the size of the storage space by the graphic processing device 100.

In some other embodiments of the present disclosure, as shown in FIG. 4, the graphic processing module 102 includes a cache write sub-device 1021, a cache read sub-device 1022, and a cache address management sub-device 1023.

The storage unit allocation device 103 allocates cache addresses to the respective graphic processing modules 102 while allocating cache units to the respective graphic processing modules 102. The cache address management sub-device 1023 is used to construct a correspondence between a cache address and a number and an in-unit address of a storage unit, wherein the in-unit address is a storage address within the storage unit.

The cache write sub-device 1021 is used to obtain the write information and the corresponding write cache address, obtain a target number and a target in-unit address of the storage unit corresponding to the write cache address according to the correspondence constructed by the cache address management sub-device 1023, and write the write information to the storage position corresponding to the target number and the target in-unit address. After the information is written, the cache address management sub-device 1023 can, for example, include a first portion 1024, so as to inform the cache read sub-device 1022 the storage position corresponding to the number of the information that has been written and the in-unit address, and the corresponding write cache address, after that the cache read sub-device 1022 can subsequently read the information from these storage positions where the information has been written.

The cache read sub-device 1022 is used to obtain a read cache address, obtain a target number and a target in-unit address of a storage unit corresponding to the read cache address based on the correspondence, and read the target information back from a storage position corresponding to the target number and the target in-unit address. After the cache read sub-device 1022 reads back the target information from a storage position corresponding to the target number and the target in-unit address, the cache address management sub-device 1023 can, for example, comprise a second portion 1025, so as to release a cache address corresponding to the target number and the target in-unit address, thereby allowing the cache write sub-device 1021 to write data to the released cache position again.

By setting the cache address management sub-device 1023 to convert the assigned cache address with the number of the storage unit and the address within the storage unit, the storage units assigned for each graphic processing module can be distributed in different positions in the memory to better utilize the storage space in the memory.

In addition, in some embodiments of the present disclosure, the storage unit allocation device 103 is further used to release all of the storage units allocated to each graphic processing module 102 upon completion of graphic processing for a sub-graphic by that graphic processing module 102.

In some embodiments of the present disclosure, the number of graphics to be processed is multiple, and the storage unit allocation device 103 is further used to, based on the graphic format and resolution of the plurality of graphics to be processed, determine the size of the storage unit.

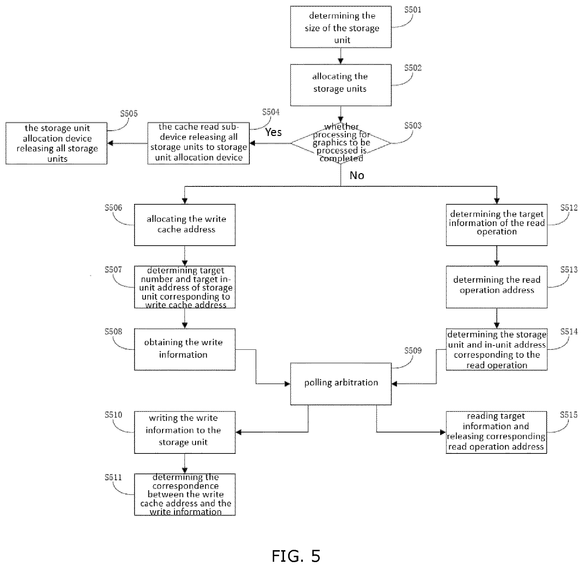

In the following, graphic processing apparatus and graphic processing method provided by embodiments of the present disclosure will be exemplified. It can be appreciated that the following is only an illustrative and non-limiting example of a specific embodiment of the present disclosure, which can specifically include, as shown in FIG. 5 the following steps.

The process of allocating the storage unit can be pre-completed, before processing the graphic to be processed, which includes S501: determining the size of the storage unit. Specifically, the size of the storage unit can be determined by the storage unit allocation device 103 based on the graphic format and resolution of the graphics to be processed.

S502: allocating the storage units. Specifically, the storage units can be allocated by the storage unit allocation device 103 to the cache address management sub-device 1023.

In the process of processing the graphics to be processed, it is also possible to determine in real-time whether the graphics to be processed are processed or not, specifically including S503: determining whether the processing for the graphics to be processed is completed; if the processing is completed, executing S504; and if it is not completed, executing S506 or S512.

S504: the cache read sub-device releasing all storage units to the storage unit allocation device. The graphics to be processed have been processed and the cache read sub-device no longer needs the storage units and can release all of the storage units to the storage unit allocation device 103 for reallocation.

S505: the storage unit allocation device releasing all storage units. The storage unit allocation device 103 can release all of the storage units for subsequent use of the storage units by other devices.

In the process of processing the graphic to be processed, it can include a data write operation and a data read operation, wherein the data write operation can specifically include S506: allocating the write cache address. Specifically, it may be that the storage unit allocation device 103 assigns a write cache address to the cache write sub-device 1021.

S507: determining the target number and target in-unit address of the storage unit corresponding to the write cache address. Specifically, a target number and a target in-unit address of the storage unit to which the write cache address corresponds can be obtained based on the correspondence constructed by the cache address management sub-device.

S508: obtaining the write information. Specifically, the write information can be pixel point information corresponding to the graphics to be processed, such as coordinate information.

S509: polling arbitration. Specifically, the polling arbitration determines whether the corresponding read operation or write operation can be performed, and if the arbitration result is that the corresponding read operation or write operation can be performed, the cache write sub-device 1021 performs the corresponding write operation or the cache read sub-device 1022 performs the corresponding read operation; on the contrary, if the arbitration result is that the corresponding read operation or write operation cannot be performed, the cache write sub-device 1021 suspends the corresponding write operation or the cache read sub-device 1022 suspends the corresponding read operation.

S510: writing the write information to the storage unit. Specifically, it can be that the cache write sub-device 1021 writes the write information to a storage position of the target in-unit address within storage unit 201 having the target number corresponding to the write cache address.

S511: determining the correspondence between the write cache address and the write information. Specifically, the write information can be, for example, pixel point information of the graphic to be processed, and after writing the pixel point information to the storage unit 201 in the memory, a correspondence between the pixel point information and the write cache address can be established, and the correspondence between the pixel point information and the write cache address can be sent to the cache address management sub-device 1023.

The data read operation can specifically include S512: determining the target information of the read operation. Specifically, the target information can, for example, be pixel point information corresponding to the graphic to be processed, such as coordinate information.

S513: determining the read operation address. Specifically, obtaining the read operation address can be, for example, obtaining a cache address corresponding to the pixel point information in the target information as the read operation address, based on a correspondence between the pixel point information and the write cache address.

S514: determining the storage unit and in-unit address corresponding to the read operation.

S509: polling arbitration. Specifically, the polling arbitration determines whether the corresponding read operation or write operation can be performed, and if the arbitration result is that the corresponding read operation or write operation can be performed, the cache write sub-device 1021 performs the corresponding write operation or the cache read sub-device 1022 performs the corresponding read operation; on the contrary, if the arbitration result is that the corresponding read operation or write operation cannot be performed, the cache write sub-device 1021 suspends the corresponding write operation or the cache read sub-device 1022 suspends the corresponding read operation.

S515: reading the target information and releasing the corresponding read operation address.

Example 3 of the present disclosure relates to a computer-readable storage medium storing a computer program. The computer program is executed by the processor to implement the above method embodiments.

Those skilled in the art can understand that all or some of the steps in the methods of the embodiments described above can be accomplished by instructing the associated hardware through a program, which is stored on a storage medium, and includes some instructions to cause a device (which can be a microcontroller, chip, etc.) or a processor to perform all or some of the steps of the methods of various embodiments of the present disclosure. The aforementioned storage media include a USB flash drive, removable hard disk, read-only memory (ROM), random access memory (RAM), disk or CD-ROM, and other media that can store program code.

All of the above are only specific embodiments of the present disclosure, but the scope of protection of the present disclosure is not limited thereto, and any changes or substitutions that can be readily thought of by any person skilled in the art within the scope of the technology disclosed in the present disclosure shall be covered by the scope of protection of the present disclosure. Therefore, the scope of protection of the present disclosure shall be governed by the scope of protection of the claims.

## Claims

1. A graphic processing method, **characterized in that** the graphic processing method is applied to a graphic processing apparatus, wherein the graphic processing apparatus comprises a graphic processing device and a memory, the graphic processing device comprises a plurality of graphic processing modules, the memory comprises a plurality of storage units, and the graphic processing method comprises:
obtaining a graphic to be processed, wherein the graphic to be processed comprises a plurality of sub-graphics;
using the plurality of graphic processing modules to perform a graphic processing on the plurality of sub-graphics, wherein each of the graphic processing modules processes up to one of the sub-graphics in a single processing cycle;
obtaining a size of a storage space required by each of the graphic processing modules for processing the sub-graphics; and
allocating a corresponding amount of storage units to each of the graphic processing modules based on the size of the storage space.

2. The graphic processing method according to claim 1, wherein the allocating a corresponding amount of storage units to each of the graphic processing modules based on the size of the storage space comprises:
allocating a corresponding cache address to each of the graphic processing modules based on the amount of the storage units; and
constructing a correspondence between the cache address and a number and an in-unit address of the storage units, wherein the in-unit address is an address stored within the storage units.

3. The graphic processing method according to claim 2, wherein the using the plurality of graphic processing modules to perform a graphic processing on the plurality of sub-graphics comprises:
obtaining write information and a corresponding write cache address;
obtaining a target number and a target in-unit address of the storage units corresponding to the write cache address based on the correspondence; and
writing the write information to a storage position corresponding to the target number and the target in-unit address.

4. The graphic processing method according to claim 2, wherein the using the plurality of graphic processing modules to perform a graphic processing on the plurality of sub-graphics comprises:
obtaining a read cache address;
obtaining a target number and a target in-unit address of the storage units corresponding to the read cache address based on the correspondence; and
reading target information back from a storage position corresponding to the target number and the target in-unit address.

5. The graphic processing method according to claim 4, wherein after reading target information back from a storage position corresponding to the target number and the target in-unit address, the graphic processing method further comprises:
releasing a cache address corresponding to the target number and the target in-unit address.

6. The graphic processing method according to claim 1, wherein the using the plurality of graphic processing modules to perform a graphic processing on the plurality of sub-graphics comprises:
releasing all of the storage units allocated to the graphic processing modules, after finishing the graphic processing for the sub-graphics by each of the graphic processing modules.

7. The graphic processing method according to claim 1, wherein the number of graphics to be processed is multiple, and the graphic processing method comprises:
determining a size of the storage units based on a graphic format and a resolution of the multiple graphics to be processed.

8. A graphic processing apparatus, **characterized in that** the graphic processing apparatus comprises:
a graphic processing device and a memory, wherein the memory comprises a plurality of storage units; and
the graphic processing device comprises a graphic acquisition device, a plurality of graphic processing modules, and a storage unit allocation device, wherein the graphic acquisition device is configured to acquire a graphic to be processed, wherein the graphic to be processed comprises a plurality of sub-graphics; the plurality of graphic processing modules are configured perform a graphic processing on the plurality of sub-graphics, wherein each of the graphic processing modules processes up to one of the sub-graphics in a single processing cycle; and the storage unit allocation device is configured to obtain a size of a storage space required by each of the graphic processing modules for processing the sub-graphics, and to allocate a corresponding amount of the storage units to each of the graphic processing modules in accordance with the size of the storage space.

9. The graphic processing apparatus according to claim 8, wherein the graphic processing modules further comprise: a cache address management sub-device, wherein
the storage unit allocation device is configured to allocate a corresponding cache address for each of the graphic processing modules according to the amount of the storage units, and the cache address management sub-device is configured to construct a correspondence between the cache address and a number and an in-unit address of the storage units, wherein the in-unit address is an address stored within the storage unit.

10. The graphic processing apparatus according to claim 9, wherein the graphic processing modules further comprise: a cache write sub-device, wherein
the cache write sub-device is configured to obtain write information and a corresponding write cache address; obtain a target number and a target in-unit address of the storage units corresponding to the write cache address based on the correspondence; and write the write information to a storage position corresponding to the target number and the target in-unit address.

11. The graphic processing apparatus according to claim 9, wherein the graphic processing modules further comprise: a cache read sub-device, wherein
the cache read sub-device is configured to obtain a read cache address; obtain a target number and a target in-unit address of the storage units corresponding to the read cache address according to the correspondence; and read target information back from a storage position corresponding to the target number and the target in-unit address.

12. The graphic processing apparatus according to claim 11, wherein after the cache read sub-device reads back the target information from the storage position corresponding to the target number and the target in-unit address, the cache address management sub-device is further configured to release the cache address corresponding to the target number and the target in-unit address.

13. The graphic processing apparatus according to claim 8, wherein after finishing the graphic processing for the sub-graphics by each of the graphic processing modules, the storage unit allocation device is further configured to release all the storage units allocated to the graphic processing modules.

14. The graphic processing apparatus according to claim 8, wherein the number of graphics to be processed is multiple, and the storage unit allocation device is further configured to determine a size of the storage units based on a graphic format and a resolution of the multiple graphics to be processed.

15. A computer-readable storage medium, **characterized by** storing a computer program, wherein the computer program is executed by a processor to implement the graphic processing method according to any one of claims 1 to 7.
